# EUROPEAN PATENT SPECIFICATION

(11) **EP 1 151 918 B1**
(45) Date of publication and mention of the grant of the patent: **19.11.2003**
(21) Application number: 00830325.7
(22) Date of filing: 05.05.2000
(51) Int. Cl.: B64C 31/028

(54) **Hang glider**
Hängegleiter
Aile delta

(43) Date of publication of application: 07.11.2001
(73) Proprietor: Petretto, Gesuino, 00141 Roma (IT)
(72) Inventor: Petretto, Gesuino, 00141 Roma (IT)
(74) Representative: Iannone, Carlo Luigi

(56) References cited:
- EP-A- 0 109 906
- DE-A- 3 421 503
- FR-A- 2 310 258
- GB-A- 2 050 263
- US-A- 3 936 012
- US-A- 4 050 654

## Description

The present invention concerns a light hang glider.

More particularly, the invention relates to a light hang glider of a type that can be disassembled, the hang glider comprising a tubular frame and a wing made of cloth.

One of the main problems with ultra-light aircrafts is the difficulty of transporting them: actually, even if those aircrafts often can be disassembled, they are very cumbersome (up to 6 m long) also in folded conditions and, that is more, are very heavy. Their transportation requires therefore use of suitable luggage racks located on a vehicle roof, and loading and unloading operations, as well as assembling and disassembling operations are complex and time consuming.

To make the structure of those aircrafts lighter and simpler, special technical measures have been adopted, such as for instance use of lighter and lighter materials, such as aluminium alloys, for building the bearing structure, or of particular synthetic cloths for the wings.

However, since in conventional hang gliders the wing is wholly borne by the frame and it must bear considerable stresses during flight, it is impossible to reduce the weight of both the bearing frame and the wing below certain limits.

The aim of the invention is to provide a hang glider, which is easy to be assembled and disassembled and has a reduced weight and size and thus is easy to transport, while presenting however high performance, optimum manoeuvring capability and high safety.

The above and other aims are attained by the light hang glider made in accordance to the invention, as claimed in the appended claims.
US A 3936012 describes a hang glider according to the preamble of claim 1 of the present application

The light hang glider made in accordance with the invention can be readily disassembled and, owing to its reduced size and weight, transported even inside a small motor car. Moreover, thanks to the self-inflatable and hence self-bearing wing, it is possible to considerably reduce the weight and the size of the frame, while ensuring high structural strength and robustness.

The above and other aims of the invention will become more apparent from the description of a preferred embodiment, with reference to the accompanying drawings, in which:

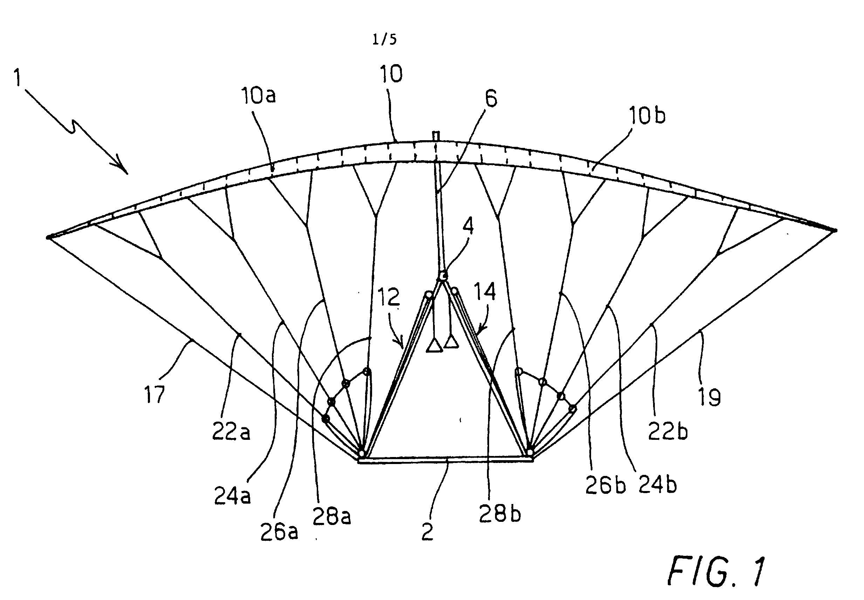

- Fig. 1 is a front view of a hang glider made in accordance with the invention, with the wing in its uppermost position;
- Fig. 1 is a front view of a hang glider made in accordance with the invention, with the wing its lowermost position;
- Fig. 3 is an enlarged detail of the hang glider shown in Fig. 1;
- Fig. 4 is a top view of a hang glider made in accordance with the present invention;
- Fig. 5 is a cross-sectional view of the wing of a hang glider made in accordance with the present invention; and
- Fig. 6 is a perspective view of a valve for air inlet into a wing of a hang glider made in accordance with the present invention.

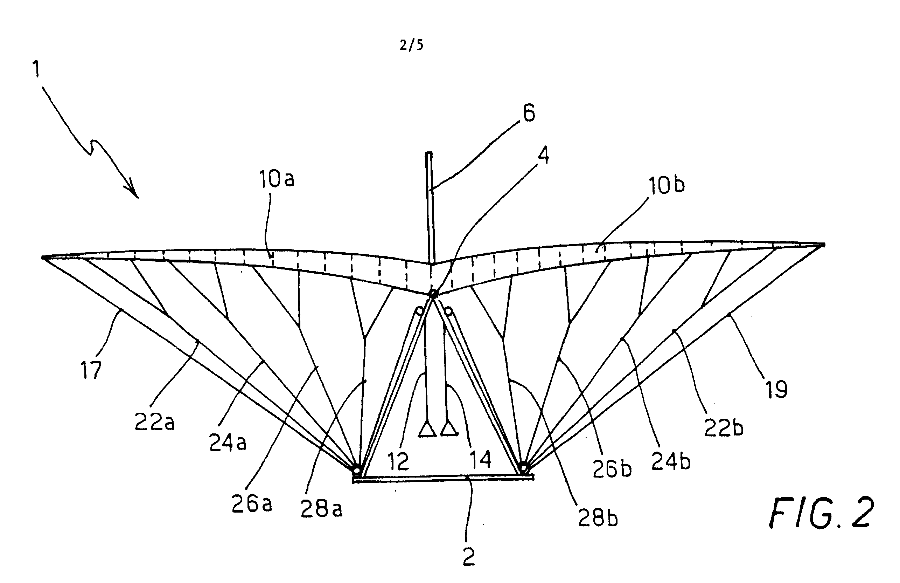

With reference to Figs. 1 and 2, a hang glider 1 made in accordance with the present invention comprises a bearing tubular structure including a longitudinal crossbar 4, a lower control trapeze 2, an upper vertical turret 6 and two wing spars (not visible in the Figure since they are located inside the wing), and a wing 10 made of two half-wings 10a, 10b, joined together in the central portion and secured at their ends to the ends of the two wing spars.

All members forming the bearing tubular structure can be disassembled; moreover the two wing spars may be of telescopic type, so that they can be readily and quickly shortened.

Two lower tie rods 17, 19 join the end of the wing spars with lower trapeze 2 to keep the correct angles and positions of the wing spars during flight.

Wing 10 is connected to the bearing structure, in particular to lower control trapeze 2, through a plurality of cords 22a - 28a, 22b - 28b of which the lengths can be varied to move the central portion of wing 10 close to or away from lower control trapeze 2. Thus, it is possible to vary the so-called wing dihedron, i. e. the angle between each half wing and the normal to the symmetry plane of the whole wing.

Fig. 1 indeed shows a hang glider in which wing 10 is in its uppermost position, which is characterised by a higher lift and hence is preferred during take-off and landing.

Cords 22a - 28a, 22b - 28b are arranged along the whole length of wing 10 and are suitably spaced from one another so as to uniformly distribute the load of the pilot and of the bearing structure itself over the wing. The number of cords shown in the drawing is merely given by way of an indication and can vary depending on the wing size and shape.

Each cord may be shortened, as described in detail hereinafter, by a variable extent that depends on the cord attack position on the wing and ranges from zero at the ends of half wings 10a, 10b to a maximum at the wing central portion.

In its central part wing 10 is provided with an eyelet allowing the wing to slide on the upper vertical turret 6, without however leaving the turret itself.

Fig. 2 shows the same hang glider 1 in which wing 10 is in its lowermost position, which is characterised by a lower lift allowing the aircraft to reach higher speeds.

In order to lower wing 10 and bring it to the lowermost position shown in Fig. 2 or to any intermediate position between the uppermost and lowermost positions, a rope pulley system 12, 14 is used, which is controlled by the pilot and is connected to cords 22a - 28a, 22b - 28b.

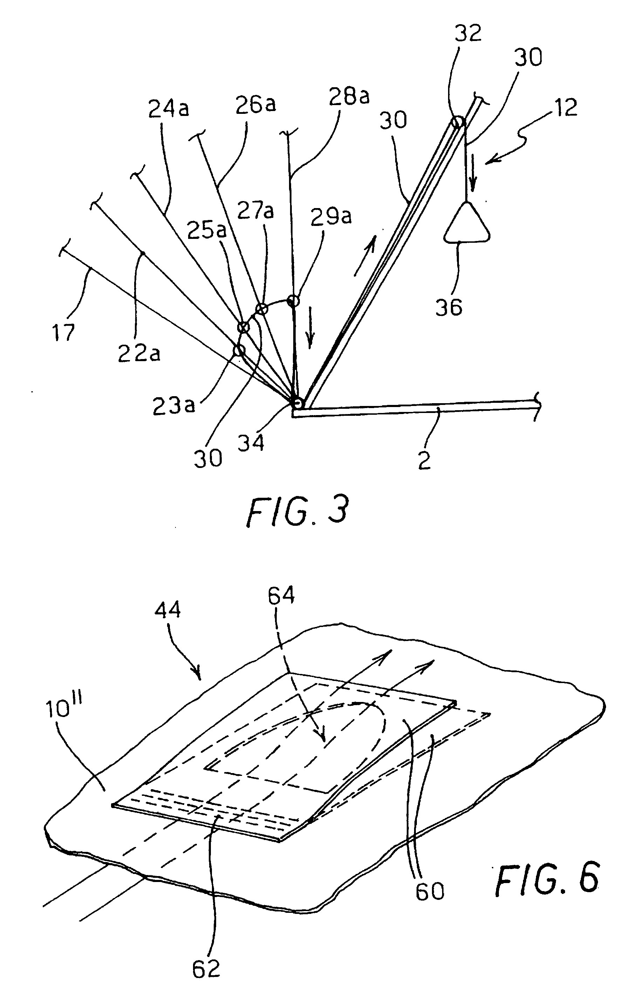

Fig. 3 shows in detail half the rope pulley system, namely the half system associated with the left half wing 10a, since the structure and operation of the other half system are the same.

The pulley system comprises a rope 30, passing inside a set of rings 23a, 25a, 27a and 29a secured to wing cords 22a, 24a, 26a and 28a, respectively. A first end of rope 30 is secured to trapeze 2 near a first pulley 32, whereas the other hand is provided with a handle 36 that can be operated by the pilot. When the pilot pull the handle downwards, thanks to the first and second pulleys 32, 34 the cords are pulled downwards in uniform manner, since rope 30 can freely slide inside rings 23a, 25a, 27a and 29a. Moreover, the pulley system allows scaling down the required effort, thus making the manoeuvre particularly easy.

Notwithstanding the provision of rope 30, for safety reasons the cords are anyway secured to trapeze 2. In this manner, even in case of breakage of rope 30, the wing remains connected to the bearing structure.

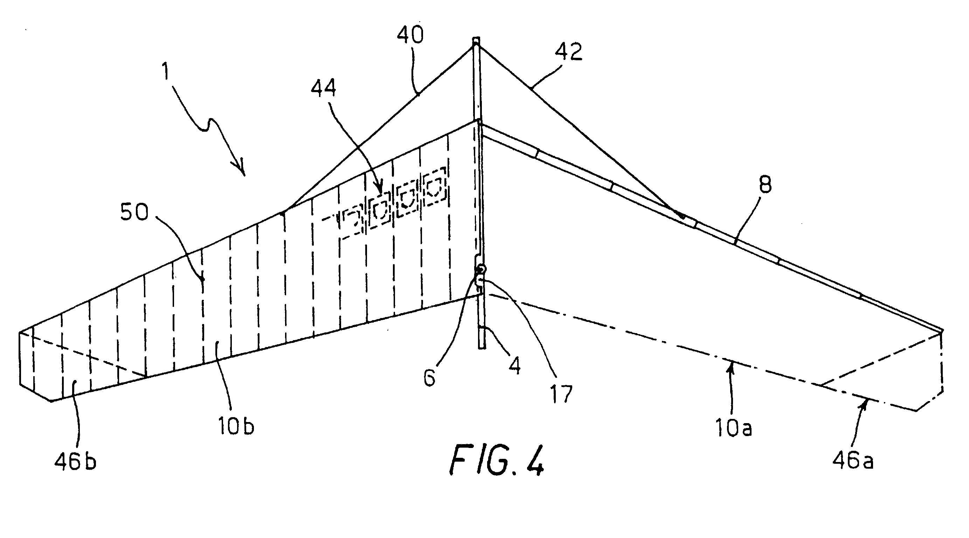

Fig. 4 is a top view of hang glider 1. To better highlight the bearing structure, in particular a telescopic wing spar 8, righthand half wing 10a has been removed and it is indicated in phantom lines. On the contrary partition walls 50 between the boxes and valves 44 for air inlet into the boxes are shown in lefthand half wing 10b. Each box is equipped with an air inlet valve 44, yet for sake of simplicity Fig. 4 shows only a limited number of valves.

Moreover Fig. 4 shows two leading tie-rods 40, 42 used to keep the correct angles of the wing spars relative to the aircraft symmetry axis.

The end portions of the half wings, shown at 46a and 46b, are thinner and they are connected, through suitable cords not shown in the Figure, to corresponding control members that can be operated by the pilot in order to make some manoeuvres, such as turns, easier.

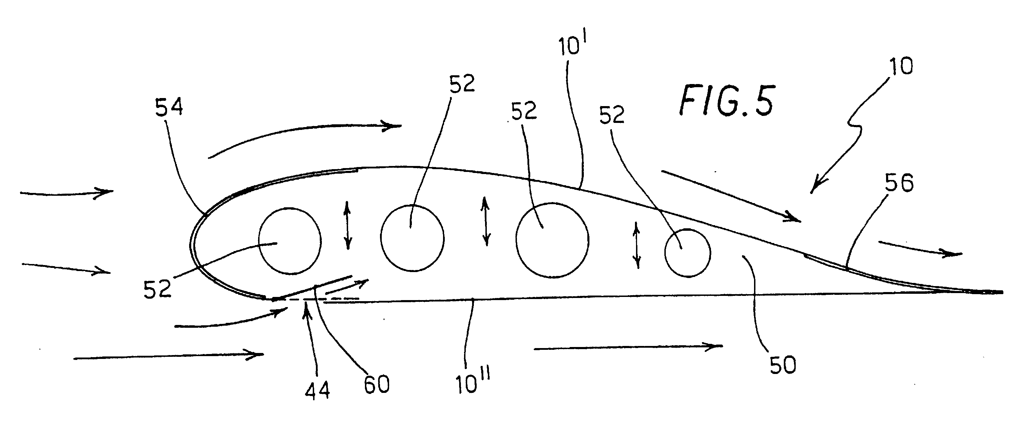

Fig. 5 shows instead wing 10 sectioned in correspondence with one of the boxes. More particularly, it can be seen that the wing is composed of two cloth layers, an upper layer 10' and a lower layer 10", which define an air space that, when filled with air, keeps the wing rigid.

A rigid front rib 54, provided in each box, keeps the proper curvature of the leading wing profile. Said rib is useful especially when, during hang glider assembling, the air inside the wing is not yet pressurised.

The boxes are separated by cloth partitions 50, provided with circular openings 52 allowing the air to be distributed in uniform manner inside the wing, thereby permitting a symmetric inflation.

The trailing wing portion can be provided with a plurality of rear rigid ribs 56 that, by keeping the proper curvature, act as stabilisers and assist in reducing the so-call "spin" effect during flight.

Air inlet into the wing takes place through valve 44, located in the lower wing surface 10" and shown in detail in Fig. 6. Valve 44 essentially consists of an opening 64, made in lower wing layer 10", and a cloth piece 60, of rectangular shape, applied to the inner surface so as to wholly cover opening 64.

Cloth piece 60 is sewed, along a side 62, to the wing cloth in such a manner that it can be lifted, as shown in solid line in Fig. 6, to allow air inlet, and can instead close opening 64 when the internal air pressure exceeds the external pressure.

During flight, the air inside wing 10 is pressurised, thereby closing valve 44 and creating a rigid wing profile.

Wing stiffness is therefore ensured by its own structure, of the self-inflatable and self-bearing type, and not by the tubular bearing structure, which therefore can be undersized with respect to conventional hang gliders. This has considerable advantages from the weight, size and assembling and disassembling easiness standpoints.

Moreover, the different positions the wing can take during flight allow varying the lift and the speed, and consequently the gliding coefficient, thereby permitting manoeuvres that would be otherwise impossible when using a conventional hang glider.

Even from the safety standpoint the hang glider made in accordance with the present invention has a lot of advantages. For instance, in the present of ascending thermal currents, the wing stiffness together with the possibility of reducing lift and increasing the descent speed allows coming out from a dangerous situation. Moreover, in case of a structural frame failure, the wing in uppermost position act as a parachute and allows the pilot to land in a wholly safe condition.

The structure robustness allows the hang glider to be equipped with an engine carriage, so that an engine-operated ultra-light aircraft with very reduced size is obtained.

## Claims

1. A hang glider of the type comprising:
- a bearing tubular structure including a longitudinal keel (4), a lower control trapeze (2), an upper vertical turret (6) and two wing spars (8), whereby the upper vertical turret (6) and the lower control trapeze (2) are connected to the teel (4),
- a wing (10) made of two half-wings (10a, 10b) joined together at their rear ends in a central portion of the wing and secured at their leading edges to the two wing spars (8), said wing (10) being a wing of variable dihedral type, connected to said lower control trapeze through a plurality of cords (22a-28a, 22b-28b), **characterised in that** the lengths of the cords (22a-28a, 22b-28b), can be varied to vary the angle formed by each half-wing (10a, 10b) with the normal to the symmetry plane of the whole wing, whereby the central portion of the wing slides on the upper vertical turret (6).

2. A hang glider according to claim 1, wherein said cords (22a - 28a, 22b - 28b) are arranged along the whole length of the wing (10) and are shortened or lengthened by extents which are directly proportional to the distance of the respective attack point on the wing from the tip end of each half wing.

3. A hang glider according to claim 2, wherein the wing (10) is provided, in its central portion, with an eyelet sliding on said upper vertical turret (6).

4. A hang glider according to claim 3, wherein the maximum lengths of the cords (22a - 28a, 22b - 28b) are such as to allow the wing (10) to keep an uppermost position in which its central portion reaches the upper end of said upper vertical turret (6).

5. A hang glider according to claim 2, further comprising, in correspondence with the lower control trapeze (2), a rope pulley system (12, 14), controlled by the pilot and connected to said cords (22a - 28a, 22b - 28b), so that the latter can be pulled to lower the wing (10).

6. A hang glider according to claim 5, wherein the rope (30) of said pulley system (12) is connected to each cord (22a - 28a) through a ring (23a - 29a) which is secured to the respective cord and in which the rope (30) itself is freely slidable.

7. A hang glider according to claim 1, wherein said wing (10) is a box-type wing.

8. A hang glider according to claim 7, wherein said boxes are in communication with one another through openings (52) provided in the partition walls (50) between adjacent boxes.

9. A hang glider according to claim 7, wherein said wing (10) comprises, on its lower surface (10"), a plurality of openings (64) for air inlet into said boxes.

10. A hang glider according to claim 9, wherein each opening (64) is closed by a valve (44) which opens towards the inside to allow air inlet and which closes when the pressure inside the box exceeds the external pressure.

11. A hang glider according to any of claims 7 to 10, wherein said wing (10) is equipped with a plurality of rigid front ribs (54) capable of keeping the leading wing profile curved.

12. A hang glider according to any of claims 7 to 11, wherein said wing (10) is equipped with a plurality of rigid rear ribs (56) inserted into the trailing end portion of the wing.

## Patentansprüche

1. Hängegleiter vom Typ mit
- einem tragenden Rohrrahmen, der einen Längsholm (4), ein unteres Steuertrapez (2), einen oberen Vertikalstab (6) und zwei Flügelausleger (8) hat, von denen der obere Vertikalstab (6) und das untere Steuertrapez (2) mit dem Holm (4) verbunden sind,
- einem Flügel (10) aus zwei Halbflügeln (10a, 10b), die an ihren rückwärtigen Enden im Zentralbereich des Flügels miteinander verbunden sind und an ihren vorderen Enden mit den beiden Flügelauslegern (8) verbunden sind, wobei der Flügel (10) vom Typ einer variablen V-Form ist und mit dem unteren Steuertrapez über mehrere Schnüre (22a-28a, 22b-28b) verbunden ist, **dadurch gekennzeichnet, dass** die Längen der Schnüre (22a-28a, 22b-28b) zur Veränderung des von jedem Halbflügel (10a, 10b) mit der Senkrechten zur Symmetrieebene des Gesamtflügels gebildeten Winkels veränderbar ist, wobei der Zentralteil der Flügel auf dem oberen Vertikalstab (6) gleitet.

2. Hängegleiter nach Anspruch 1, bei welchem die Schnüre (22a-28a, 22b-28b) entlang der gesamten Länge des Flügels (10 angeordnet sind und um Ausmaße verkürzbar oder verlängerbar sind, welche direkt proportional zum Abstand des jeweiligen Angriffspunkts am Flügel vom spitzen Ende jedes Halbflügels sind.

3. Hängegleiter nach Anspruch 2, bei welchem der Flügel (10) in seinem Mittelteil mit einer Öse versehen ist, die auf dem oberen vertikalen Drehkopf (6) gleitet.

4. Hängegleiter nach Anspruch 3, bei welchem die maximale Länge der Schnüre (22a-28a, 22b-28b) so bemessen ist, dass der Flügel (10) eine oberste Position halten kann, in welcher sein Mittelteil das obere Ende des oberen Vertikalstabes (6) erreicht.

5. Hängegleiter nach Anspruch 2, weiterhin umfassend in Korrespondenz mit dem unteren Steuertrapez (2) ein Seilzugsystem (12, 14), welches vom Pilot steuerbar und mit den Schnüren (22a-28a, 22b-28b) verbunden ist, so dass letztere zum Absenken des Flügels (10) gezogen werden können.

6. Hängegleiter nach Anspruch 5, **dadurch gekennzeichnet, dass** das Seil (30) des Seilzugsystems (12) mit jeder Schnur (22a-28a) über einen Ring (23a-29a) verbunden ist, welcher an der jeweiligen Schnur befestigt ist und in welchem das Seil (30) frei gleiten kann.

7. Hängegleiter nach Anspruch 1, bei welchem der Flügel (10) ein Hohlraumflügel ist.

8. Hängegleiter nach Anspruch 7, bei welchem die Hohlräume miteinander über Öffnungen (52) in Verbindung stehen, die in den Trennwänden (50) zwischen benachbarten Hohlräumen vorgesehen sind.

9. Hängegleiter nach Anspruch 7, bei welchem der Flügel (10) an seiner unteren Oberfläche (10') eine Mehrzahl von Öffnungen (64) zum Lufteintritt in die Hohlräume aufweist.

10. Hängegleiter nach Anspruch 9, bei welchem jede Öffnung (64) durch ein Ventil (44) verschlossen ist, welches sich zum Lufteintritt nach innen öffnet und sich schließt, wenn der Druck im Hohlraum den Außendruck übersteigt.

11. Hängegleiter nach einem der Ansprüche 7 bis 10, bei welchem der Flügel (10) mit einer Mehrzahl steifer Vorderrippen (54) versehen ist, welche das Vorderprofil des Flügels gekrümmt halten.

12. Hängegleiter nach einem der Ansprüche 7 bis 11, bei welchem der Flügel (10) mit einer Mehrzahl steifer Hinterrippen (56) versehen ist, die in den rückwärtigen Endteil des Flügels eingesetzt sind.

## Revendications

1. Deltaplane du type comprenant :
- une structure portante tubulaire comportant une quille longitudinale (4), un trapèze de commande inférieur (2), une monture verticale supérieure (6) et deux longerons d'aile (8), grâce à quoi la monture verticale supérieure (6) et le trapèze de commande inférieur (2) sont raccordés à la quille (4),
- une aile (10) composée de deux demi-ailes (10a, 10b) réunies ensemble au niveau de leurs extrémités arrière, dans une partie centrale de l'aile et fixées au niveau de leurs bords d'attaque aux deux longerons d'aile (8), ladite aile (10) étant une aile de type dièdre variable, raccordée au dit trapèze de commande inférieur par l'intermédiaire d'une pluralité de câbles (22a à 28a, 22b à 28b), **caractérisé en ce qu'**on peut faire varier la longueur des câbles (22a à 28a, 22b à 28b), pour faire varier l'angle formé par chacune des demi-ailes (10a, 10b) par rapport à la perpendiculaire au plan de symétrie de l'aile toute entière, grâce à quoi la partie centrale de l'aile coulisse sur la monture verticale supérieure (6).

2. Deltaplane selon la revendication 1, dans lequel lesdits câbles (22a à 28a, 22b à 28b) sont agencés sur toute la longueur de l'aile (10) et sont raccourcis ou rallongés dans des mesures qui sont directement proportionnelles à la distance entre le point d'attaque respectif sur l'aile, et le bout d'aile de chaque demi-aile.

3. Deltaplane selon la revendication 2, dans lequel l'aile (10) est munie, dans sa partie centrale, d'un oeillet coulissant sur ladite monture verticale supérieure (6).

4. Deltaplane selon la revendication 3, dans lequel les longueurs maximales des câbles (22a à 28a, 22b à 28b) sont telles qu'elles permettent à l'aile (10) de conserver une position la plus haute possible, dans laquelle sa partie centrale atteint l'extrémité supérieure de ladite monture verticale supérieure (6).

5. Deltaplane selon la revendication 2, comprenant en outre, et correspondant avec le trapèze de commande inférieur (2), un système de poulies à câble (12, 14), commandé par le pilote et raccordé aux dits câbles (22a à 28a, 22b à 28b), de telle sorte qu'on puisse tirer sur ces derniers pour abaisser l'aile (10).

6. Deltaplane selon la revendication 5, dans lequel la corde (30) dudit système de poulies (12) est raccordé à chaque câble (22a à 28a) par l'intermédiaire d'un anneau (23a à 29a) qui est fixé sur le câble respectif et dans lequel la corde (30) elle-même peut coulisser librement.

7. Deltaplane selon la revendication 1, dans lequel ladite aile (10) est une aile du type caisson

8. Deltaplane selon la revendication 7, dans lequel lesdits caissons sont en communication l'un avec l'autre à travers des ouvertures (52) prévues dans les cloisons (50) séparant des caissons adjacents.

9. Deltaplane selon la revendication 7, dans lequel ladite aile (10) comprend, sur sa surface inférieure (10" ), une pluralité d'ouvertures (64) d'admission d'air dans lesdits caissons.

10. Deltaplane selon la revendication 9, dans lequel chaque ouverture (64) est fermée par une valve (44) qui s'ouvre vers l'intérieur afin de permettre l'admission de l'air et qui se ferme lorsque la pression à l'intérieur du caisson est supérieure à la pression extérieure.

11. Deltaplane selon l'une quelconque des revendications 7 à 10, dans lequel ladite aile (10) est équipée d'une pluralité de nervures avant rigides (54) capables de maintenir le profil d'attaque de l'aile incurvé.

12. Deltaplane selon l'une quelconque des revendications 7 à 11, dans lequel ladite aile (10) est équipée d'une pluralité de nervures arrière rigides (56) insérées dans la partie d'extrémité de fuite de l'aile.
